# EUROPEAN PATENT SPECIFICATION

(11) **EP 3 782 417 B1**
(45) Date of publication and mention of the grant of the patent: **03.01.2024**
(21) Application number: 18724177.3
(22) Date of filing: 04.05.2018
(51) Int. Cl.: H04W 72/566, H04L 5/00, H04W 74/08

(54) **URLLC DATA DURING MEASUREMENT GAPS**
URLLC-DATEN WÄHREND MESSLÜCKEN
DONNÉES URLLC PENDANT DES INTERVALLES DE MESURE

(43) Date of publication of application: 24.02.2021
(73) Proprietor: Huawei Technologies Co., Ltd., Longgang District Shenzhen, Guangdong 518129 (CN)
(72) Inventor: TUMULA, Chaitanya, 16440 Kista (SE); LINDOFF, Bengt, 16440 Kista (SE); MOPIDEVI, Rama, Kumar, 16440 Kista (SE)
(74) Representative: Körber, Martin Hans
(86) International application number: PCT/EP2018/061504
(87) International publication number: WO 2019/210969

(56) References cited:
- WO-A1-2017/039283
- US-A1- 2017 127 397

## Description

### TECHNICAL FIELD

The disclosure relates to a field of wireless radio communications, and more particularly to a client device, and a procedure for transmitting and/or receiving Ultra Reliable and Low Latency, URLLC, data during measurement gaps. Furthermore, the disclosure relates to corresponding methods and a computer program.

### BACKGROUND

5G new radio, NR, is being designed to support ultra-reliable low-latency communications, URLLC. URLLC services may have very strict quality of service, QoS, requirements for latency and reliability. Thus, URLLC services may be applicable to mission critical applications, such as remote control of vehicles, remote surgery, intelligent transportation, and industry automation. Radio quality measurements can be used to provide ubiquitous coverage for client devices, such as mobile phones, and these measurements may be performed during measurement gaps. Depending on the configuration of a client device, transmission or reception of URLLC data may not be possible during these measurement gaps. Therefore, URLLC data arriving for transmission in the client device during measurement gaps may violate the latency requirements of URLLC.

Document US 2017/0127397 A1 discloses a user equipment configured to discard or skip a previously configured measurement gap to provide a low latency service.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide an improved procedure for transmitting and/or receiving URLLC data. The object is achieved by the features of the independent claims. Further implementation forms are provided in the dependent claims.

According to a first aspect, a client device is configured to perform a measurement during a preconfigured measurement gap, wherein during the preconfigured measurement gap the client device transmits and receives no data with a serving network access device except data related to random access; in response to uplink, UL, ultra-reliable low-latency communications, URLLC, data arriving to a data buffer of the client device during the preconfigured measurement gap, terminate the preconfigured measurement gap independently of a configuration of the preconfigured measurement gap; and transmit the UL URLLC data to the serving network access device, characterized in that client device is further configured to implement a second layer and a MAC layer; wherein the second layer is configured to receive information about the measurement gap from the MAC layer; wherein the second layer is configured to, upon data arriving from an upper layer above the second layer to the data buffer during the measurement gap, forward the data to the MAC layer if the data is UL URLLC data and to otherwise omit forwarding the data at least until the measurement gap has been passed; wherein the MAC layer is further configured to: provide the information about the measurement gap to the second layer. With these configurations, the client device can, for example, not encompassed in the wording of the independent claims, transmit UL URLLC data irrespective of the measurement gap, while omitting to transmit non-URLLC data at least until the measurement gap has been passed and utilise the second layer in transmitting the UL URLLC data. Therefore, the client device can, for example, fulfil UL URLLC quality of service requirements irrespective of the measurement gap, while the measurement gap is not terminated in the case of non-URLLC data.

In an implementation form of the first aspect, the client device is further configured to transmit the UL URLLC data using at least one preconfigured logical channel. With these configurations, the client device can, for example, not encompassed in the wording of appended claims, utilise the at least one preconfigured logical channel for transmitting UL URLLC data irrespective of the measurement gap. Therefore, the client device can, for example, fulfil UL URLLC quality of service requirements irrespective of the measurement gap.

In a further implementation form of the first aspect, the client device is further configured to before transmitting the UL URLLC data, receive a configuration message from the serving network access device, wherein the configuration message comprises an instruction to map the UL URLLC data to at least one network predefined logical channel; and transmit the UL URLLC data using the network predefined logical channel. The time interval between receiving the configuration message and transmitting the UL URLLC data may be of any length. With these configurations, for example, not encompassed in the wording of appended claims, computational load is reduced in the client device, since the serving network access device can configure the network predefined logical channel to be used for the UL URLLC transmission.

Further, not encompassed in the wording of appended claims, the at least one preconfigured logical channel (504) is determined by preconfigured mappings in a protocol stack of the client device (100). With these configurations, the client device can, for example, transmit the UL URLLC data irrespective of the measurement gap even if the serving network access device does not configure a network predefined logical channel for UL URLLC transmission. Therefore, the client device can, for example, fulfil UL URLLC quality of service requirements irrespective of the measurement gap.

In a further implementation form of the first aspect, the MAC layer is further configured to: in response to receiving the UL URLLC data from the data buffer during the measurement gap, terminate the measurement gap and transmit the UL URLLC data to the serving network access device. With these configurations, the client device can, for example, not encompassed in the wording of appended claims, transmit UL URLLC data irrespective of the measurement gap, while omitting to transmit non-URLLC data at least until the measurement gap has been passed. Therefore, the client device can, for example, fulfil UL URLLC quality of service requirements irrespective of the measurement gap, while the measurement gap is not terminated in the case of non-URLLC data.

In a further implementation form of the first aspect the second layer comprises one of: a packet data convergence protocol, PDCP, layer, and a radio link control, RLC, layer. With these configurations, the client device can, for example, not encompassed in the wording of appended claims, utilise other layers in the protocol stack in UL URLLC transmission.

In a further implementation form of the first aspect the measurement during the measurement gap comprises at least one of: intra-frequency measurement; inter-frequency measurement; and inter radio access technology measurement. With these configurations, the client device can, for example, not encompassed in the wording of appended claims, transmit UL URLLC data irrespective of the measurement gap, wherein the measurement gap may comprise various different types of measurements. Therefore, the client device can, for example, not encompassed in the wording of appended claims, fulfil UL URLLC quality of service requirements irrespective of the measurement gap.

According to a third aspect, a method that is executed by a client device comprises performing a measurement during a preconfigured measurement gap, wherein during the preconfigured measurement gap the client device transmits and receives no data with a serving network access device except data related to random access; in response to uplink, UL, ultra-reliable low-latency communications, URLLC data arriving to a data buffer of the client device during the preconfigured measurement gap, terminating the preconfigured measurement gap independently of a configuration of the preconfigured measurement gap; and transmitting the UL URLLC data to the serving network access device, characterized by the method further comprising:
implementing a second layer and a medium access control, MAC, layer;
providing, by the MAC layer, the information about the measurement gap to the second layer;
receiving, by the second layer, information about the measurement gap from the MAC layer; and
upon data arriving from an upper layer above the second layer to the data buffer during the measurement gap, forwarding, by the second layer, the data to the MAC layer if the data is UL URLLC data and to otherwise omit forwarding the data at least until the measurement gap has been passed.

According to the fourth aspect, a computer program is provided, comprising program code configured to perform a method according to the third aspect or the fourth aspect when the computer program is executed on a computer.

Many of the attendant features will be more readily appreciated as they become better understood by reference to the following detailed description considered in connection with the accompanying drawings.

### DESCRIPTION OF THE DRAWINGS

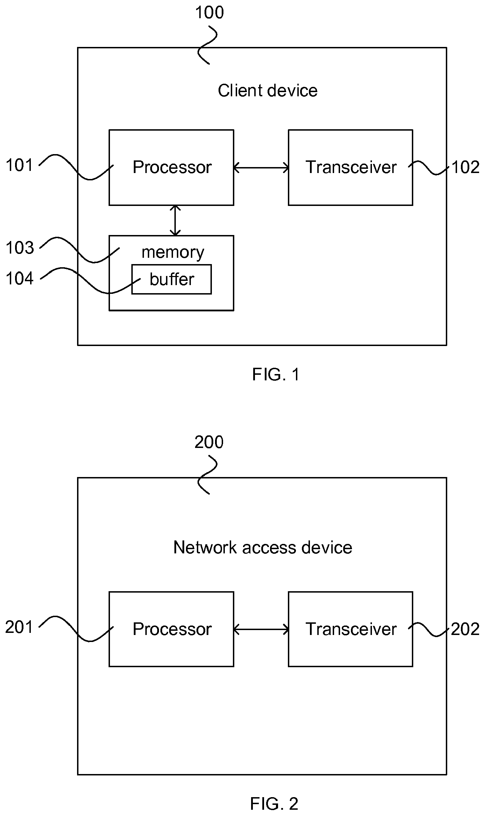

It is noted that embodiment with respect to FIG. 2 is not part of the invention, but an illustrative example necessary for understanding the invention.

The present description will be better understood from the following detailed description read in light of the accompanying drawings, wherein:
FIG. 1 illustrates a schematic representation of a client device configured for transmitting URLLC data during a measurement gap;
FIG. 2 illustrates a schematic representation of a network access device configured for receiving URLLC data during a measurement gap;
FIG. 3 illustrates a schematic representation of a measurement gap;
FIG. 4 illustrates a schematic representation of a user plane protocol layer stack according to an embodiment;
FIG. 5 illustrates a schematic representation of uplink layer 2 structure;
FIG. 6 illustrates a schematic representation of a procedure for transmitting URLLC data transmission during a measurement gap; and
FIG. 7 illustrates a schematic representation of a procedure for transmitting URLLC data transmission during a measurement gap according to another embodiment.

Like references are used to designate like parts in the accompanying drawings.

### DETAILED DESCRIPTION

The detailed description provided below in connection with the appended drawings is intended as a description of the embodiments and is not intended to represent the only forms in which the embodiment may be constructed or utilized. However, the same functions and structures may be accomplished by different embodiments. FIG. 1 illustrates a schematic representation of a client device 100, such as a wireless device, for a wireless communication system according to an embodiment. The client device 100 comprises a processor 101, a transceiver 102, and memory 103. The client device 100 may be configured to perform the functionalities and operations relating to it as described in the embodiments. The memory may comprise a data buffer 104. FIG. 2 illustrates a schematic representation of a network access device 200 according to an embodiment. The wireless communication system also comprises such network access device 200, such as a transmission and reception point, TRP, or a 5G base station, gNB, which may also comprise a processor 201 and a transceiver 202. The network access device 200 may also be configured to perform the functionalities and operations relating the network access device 200 as described in the embodiments. If the network access device 200 communicates with the client device 100, the network access device 200 may also be referred to as a serving network access device. In this contexts, the term serving may imply that the serving network access device 200 provides connectivity for the client device 100 to other parts of the wireless network and to other networks.

The client device 100 and the network access device 200 may further comprise other components that are not illustrated in FIGs. 1 and 2. The client device 100 may communicate with, for example, the network access device 200 using the transceiver 102. The network access device 200 may communicate with, for example, a single or a plurality of client devices 100 using the transceiver 202. The client device 100 may communicate with, for example, a single or a plurality of network access devices 200 using the transceiver 102. The client device 100 may also comprise a plurality of transceivers 102 and communicate with the plurality of network access devices 200 using the plurality of transceivers 102. For example, the client device 100, such as a mobile phone, can be served by one gNodeB or multiple gNodeBs. For example, in dual connectivity, the client device 100 can be served by two gNodeBs. In carrier aggregation, the client device 10 can be served by more than one carrier.

The client device 100 may be any of a User Equipment (UE) in Long Term Evolution (LTE) or 5G new radio (NR), mobile station (MS), wireless terminal, or mobile terminal which is enabled to communicate wirelessly in a wireless communication system, sometimes also referred to as a cellular radio system. The client device 100 may further be referred to as a mobile telephone, a cellular telephone, a computer tablet or a laptop with wireless capability. The client device 100 in the present context may be, for example, a portable, pocket-storable, hand-held, computer-comprised, or vehicle-mounted mobile device, enabled to communicate voice or data, via a radio access network, with another entity, such as another receiver or a server. The client device 100 can be a Station (STA) which is any device that contains an IEEE 802.11-conformant Media Access Control (MAC) and Physical Layer (PHY) interface to the Wireless Medium (WM).

The network access device 200 may be a transmission or reception point, TRP, or a NR 5G base station, gNB. The network access device 200 may be a base station, a (radio) network node or an access node or an access point or a base station, e.g., a Radio Base Station (RBS), which in some networks may be referred to as a transmitter, "eNB", "eNodeB", "gNB", "gNodeB", "NodeB", or "B node", depending on the technology and terminology used. The radio network nodes may be of different classes such as, e.g., macro eNodeB, home eNodeB or pico base station, based on transmission power and thereby also cell size. The radio network node can be a Station (STA) which is any device that contains an IEEE 802.11-conformant Media Access Control (MAC) and Physical Layer (PHY) interface to the Wireless Medium (WM).

According to an embodiment, the client device 100 is configured to perform a measurement during a preconfigured measurement gap, wherein during the preconfigured measurement gap the client device 100 transmits and receives no data with a serving network access device 200 except data related to random access. The client device 100 is further configured to in response to uplink, UL, ultra-reliable low-latency communications, URLLC, data arriving to a data buffer 104 of the client device 100 during the preconfigured measurement gap, terminate the preconfigured measurement gap independently of a configuration of the preconfigured measurement gap. The client device 100 is further configured to transmit the UL URLLC data to the serving network access device 200 during the time in which originally the now terminated measurement gap was scheduled. Thus, the client device 100 may transmit UL URLLC data irrespective of the preconfigured measurement gap or the configuration of the measurement gap.

According to an embodiment, the client device 100 may transmit the UL URLLC data using at least one preconfigured logical channel.

According to an embodiment, the client device 100 can receive a configuration message from the serving network access device 200. The configuration message comprises an instruction to map the UL URLLC data to at least one network predefined logical channel. The client device 100 can transmit the UL URLLC data using the network predefined logical channel. The time interval between receiving the configuration message and transmitting the UL URLLC data may be of any length. In this embodiment, the at least one preconfigured logical channel can be determined by the network predefined logical channel.

According to another embodiment, the client device 100 can transmit the UL URLLC data to the serving network access device 200 using preconfigured UL URLLC procedures without a network predefined logical channel. In this embodiment, the at least one preconfigured logical channel may be determined, for example, by preconfigured mappings in the protocol stack of the client device 100.

According to an embodiment, the network access device 200 is configured to transmit a configuration message to a client device 100, wherein the configuration message comprises an instruction to map an uplink, UL, ultra-reliable low-latency communication, URLLC, data to at least one predetermined logical channel. The network access device 200 is further configured to receive the UL URLLC data from the client device 100 during a preconfigured measurement gap of the client device independently of a configuration of the preconfigured measurement gap. Thus, the network access device 200 can, for example, configure a single measurement gap in the client device 100, for example to replace a terminated measurement gap, or configure a plurality of measurement gaps. This may enable the network access device 200 to dynamically configure the measurement gap for different situations.

Radio quality measurements can be used to provide good coverage for client devices 100, such as UEs. The wireless network can configure the client devices 100 to measure the downlink, DL, link quality and report the measurement results. The measurements can be, for example, an intra-frequency, an inter-frequency, or an inter radio access technology, inter-RAT, measurement. Depending on the capabilities of the client device 100, measurement gaps may be required for the client device 100 to perform, for example, inter-frequency and inter-RAT measurements. The measurement gap length in LTE may vary, for example, between 1.5 milliseconds, ms, and 6 ms depending on the configuration. During the measurement gaps, the client device 100 performs measurements, and no UL or DL data transmissions are scheduled during the measurement gap except for messages related to random access. Therefore, the client device 100 may transmit and receive no data during the measurement gaps with a serving network access device 200 except data related to random access.

If the client device 100 is served by a plurality of carriers (carrier aggregation) or network access devices 200 (dual connectivity) and the client device 100 supports measurement gaps on at least one carrier and URLLC data on one carrier, there may be interrupts on the carrier for URLLC data during which no data transmission or reception takes place. If the UL URLLC data transmission is supposed to take place on the URLLC carrier with the interrupt, the measurement can be skipped on the other carrier thus avoiding the interrupt.

For example, serving carrier 1 can be configured with measurement gaps, and serving carrier 2 can be configured for URLLC data. Even though there are separate carriers, there can be interruption on serving carrier 2. For example, once before the measurement gap and once after the measurement gap. These time intervals may be referred to as Visible Interruption Length, VIL. During VILs, no data transmission/reception takes place on serving carrier 2.NR may support, for example, three types of services: enhanced Mobile Broadband, eMBB, massive machine-type communications, mMTC, and ultra-reliable low-latency communications, URLLC.

URLLC services may have very stringent quality of service, QoS, requirements on user plane latency, for example, 0.5ms one way latency, and reliability, for example, a packet error rate of 10⁻⁵. A client device 100 supporting URLLC services may not be able to transmit in the UL during the measurement gaps due to the limitations described above. Therefore, the URLLC service data packets arriving for transmission or scheduled for transmission during a measurement gap may violate latency requirements, since the client device 100 may need to wait until the end of the measurement gap before it can transmit the URLLC service data packet. Herein, a URLLC service data packet may be referred to as, for example, a URLLC data, a URLLC data packet, a URLLC packet, or a URLLC service packet.

If a URLLC application delivers a data packet to layer 2, the packet is not transmitted in the UL, if the packet arrival collides with measurement gap. This can result in missing the QoS requirements. Hence there is a need to specify a procedure and a configuration for handling URLLC data transmission in uplink, UL, during measurement gaps for example as described in the embodiments.

NR system can support QoS model based on QoS flows. A QoS flow can be the finest granularity of QoS differentiation in the protocol data unit, PDU, session. Each QoS flow can be identified by a QoS flow identification, ID, QFI.

The client device 100 can be configured to support more than one URLLC service along with other non URLLC services such as eMBB and/or mMTC. Each service can be identified by a QFI.

URLLC service user plane traffic may be broadly classified to two traffic patterns: a set of URLLC applications may generate data periodically and a set of URLLC applications may generate data sporadically. For URLLC applications with sporadic traffic pattern, for example, the traffic/transmission pattern may be difficult to predict. Thus, there may be cases where the URLLC data arrival collides with a measurement gap. Described embodiments may solve this by transmitting or receiving URLLC data during the measurement gap.

According to an embodiment, the serving network access device 200 may configure a measurement gap specification specifying at least one measurement gap for the client device 100 and transmit the measurement gap specification to the client device 100. For URLLC application with periodic traffic pattern, the network device 200 may configure the measurement gaps of the client device 100 not to collide with data transmission, such as UL URLLC data transmission. The serving network access device 200 may also configure the measurement gap specification according to the UL URLLC transmission pattern of the client device 100.

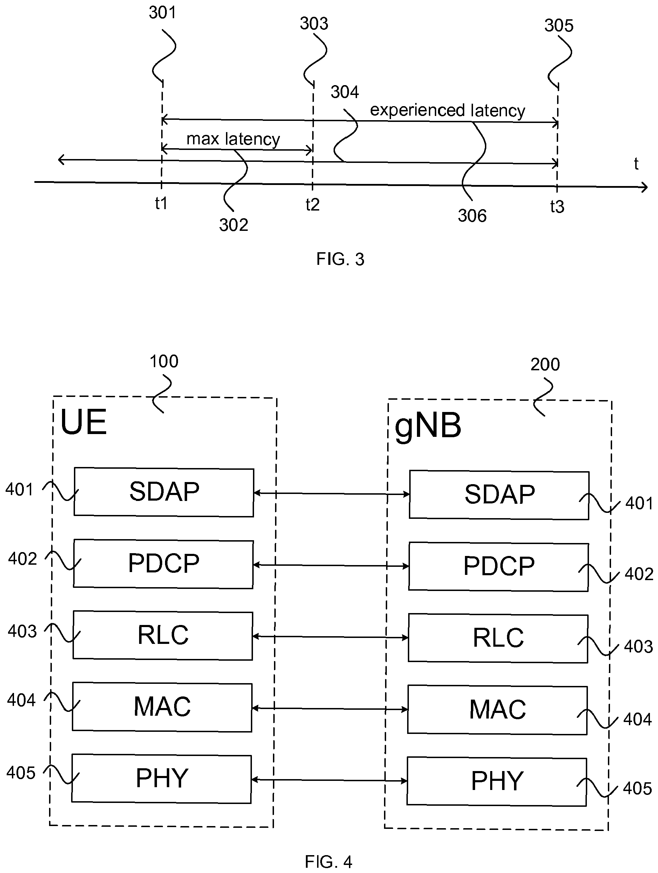

FIG. 3 illustrates a schematic representation of URLLC data transmission collision with a measurement gap. At time instant t1 301, an application delivers an URLLC data packet that should be transmitted by a client device 100. Since the application uses URLLC, the data packet should arrive to its destination, at the latest, time interval 302 after time instant t1 301, wherein the time interval 302 can be defined by the maximum allowed URLLC latency. Therefore, the data packet should arrive to its destination before time instant t2 303. However, since the application delivers the URLLC data packet during a measurement gap 304, the client device 100 may not be able to transmit the URLLC data packet before the measurement gap 304 ends at time instant t3 305. Therefore, the experienced latency 306 can be significantly larger than the maximum allowed URLLC latency 302. Realistically, even more latency may be introduced, since the URLLC data packet may not be transmitted immediately at time instant t3 305 and delivering the URLLC data packet introduces some additional latency. Described embodiments may solve this by transmitting or receiving URLLC data during the schedule time for the measurement gap.

FIG. 4 illustrates a schematic representation of a user plane protocol stack according to an embodiment. The user plane protocol stack comprises a service data adaptation protocol, SDAP, layer 401, a packet data convergence protocol, PDCP, layer 402, a radio link control, RLC, layer 403, a medium access control, MAC, layer 404, and a physical, PHY, layer, 405. The PDCP 402 layer can process internet protocol, IP, packets in the user plane. Other functions of the PDCP layer 402 can be, for example, header compression and decompression, integrity protection, ciphering and deciphering, and support for reordering and retransmission handover. Functions of the RLC layer 403 may be segmentation and reassembly of upper layer packets and retransmission to recover from packet losses. The MAC layer 404 can control access from the upper layers to the PHY layer 405 and schedule data to be transmitted when there are resources for UL transmission. The MAC layer 404 can also perform multiplexing of data from different radio bearers. The MAC layer 404 may be configured to perform operations according to the embodiments. The PHY layer 405 can provide information transfer for the upper layers through a physical channel. It should be appreciated that the terms upper and lower when referring to a network stack structure do not refer to any physical direction or relation. Instead, these terms refer to the relative functionality of the different layers. Usually, a lower layer serves an upper layer. There can also be upper layers above the layers presented in FIG. 4. The upper layers can comprise, for example, a network layer, a transport layer, a session layer, a presentation layer, and an application layer or some subset of these. The upper layers may also comprise one or more sublayers. The MAC layer 404 and other layers described above may be configured to perform operations according to the embodiments.

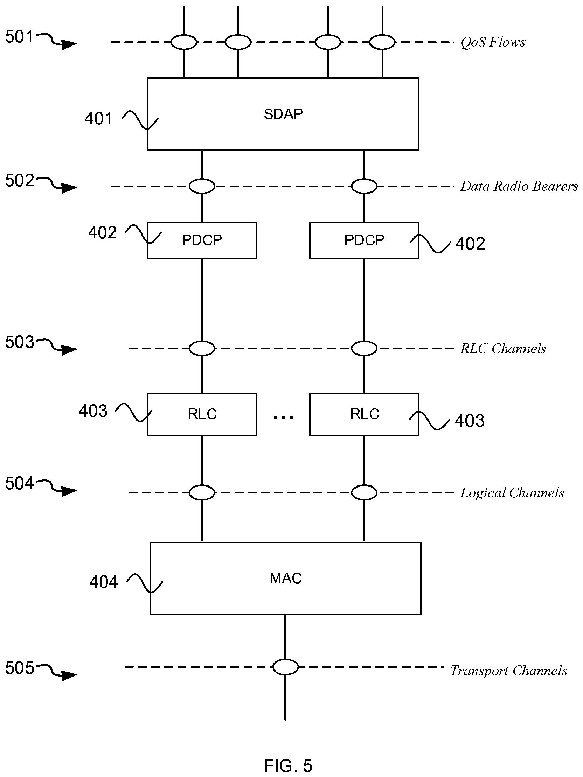

FIG. 5 illustrates a schematic representation of uplink, UL, layer 2 structure according to an embodiment. Layer 2 may also be referred to as a data link layer. The UL layer 2 structure comprises some of the same layers as the user plane control stack presented in FIG. 4. The UL layer 2 structure further comprises QoS flows 501, data radio bearers, DRBs, 502, RLC channels 503, logical channels 504, and transport channels 505. Network can configure the mapping between the QoS flows 501, DRBs 502, RLC Channels 503, logical channels 504 and transport channels 505. SDAP 401 can provide a mapping between QoS flows 501 and DRBs 502. SDAP 401 can also mark each QoS flow ID in each UL packet. In UL transmissions, the mapping of QoS flows 501 to DRBs 502 may be configured in two different ways, reflective mapping or explicit configuration. In reflective mapping, for each DRB 502 the client device 100 can monitor the QoS flow IDs of the DL packets and apply the mapping appropriately in the UL. In explicit configuration, an uplink QoS flow 501 to DRB 502 mapping can be configured by, for example, radio resource control, RRC. The PDCP layer 402 can provide a mapping between the DRBs 502 and the RLC channels 503. The RLC layer 403 can provide a mapping between the RLC channels 503 and the logical channels 504. The MAC layer 404 can provide a mapping between the logical channels 504 and the transport channels 505. The MAC layer 404 can provide services to the RLC 403 layer through the logical channels 504. A logical channel 504 may be, for example, a dedicated traffic channel, DTCH, or a multicast traffic channel, MTCH.

The network access device 200 can typically configure the client device 100, such as a UE, with a mapping of data corresponding to different URLLC services to the DRBs 502 and the mapping of the DRBs 502 to the logical channels 504. Each URLLC service can have a different QFI. Thus, the client device 100 can be configured to transmit UL

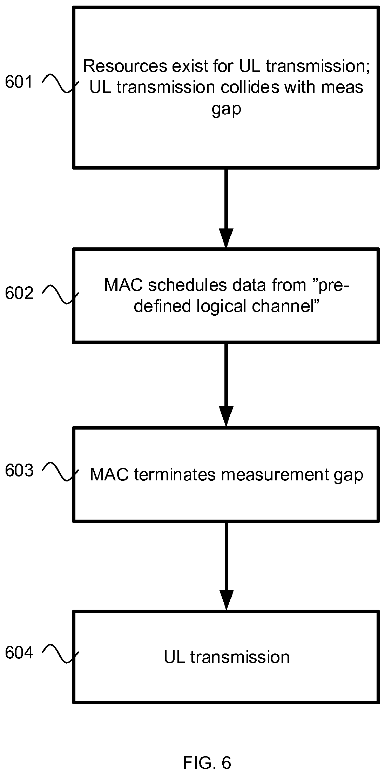

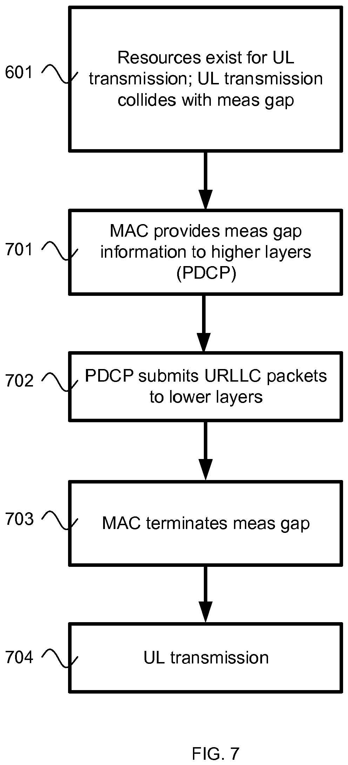

URLLC data to the network access device 200 using at least one preconfigured logical channel. These preconfigured logical channels can be determined, for example, by the mappings between the different layers presented in FIG. 5. Using these mappings and logical channels, the client device 100 can, for example, transmit UL URLLC data to the network access device 200 independent of the configuration of a preconfigured measurement gap. For example, in the embodiment of FIG. 7, the client device 100 can transmit UL URLLC data to the network access device 200 using preconfigured UL URLLC producers without a network predefined logical channel. In the embodiment of FIG. 6, on the other hand, the at least one preconfigured logical channel can be determined by the network predefined logical channel.

FIG. 6 illustrates a schematic representation of a flow chart of a network assisted procedure for URLLC transmission according to an embodiment. In operation 601, there exists a resource that the client device 100 can use for UL transmission. For example, network access device 200 may configure a predefined logical channel 501 for UL URLLC transmission irrespective of measurement gaps. This predefined logical channel 501 also may be referred to as a network predefined logical channel. In operation 602, MAC layer in the client device 100 schedules the URLLC data to be transmitted using, for example, the network predefined logical channel 501. In operation 603, the client device 100 can terminate the measurement gap so that the client device 100 can transmit the UL URLLC data. In operation 604, the client device 100 transmits the UL URLLC data to the serving network access device 200 during the terminated measurement gap. Thus, the MAC layer in the client device 100 can transmit the data corresponding to the predefined logical channel 501 irrespective of the measurement gaps.

FIG. 7 illustrates a schematic representation of client centric procedure for URLLC transmission during a measurement gap according to an embodiment. Similarly to the network assisted procedure presented in FIG. 6, in operation 601, there exists a resource that the client device 100 can use for UL transmission. In this embodiment, the network does not configure any predefined logical channel for URLLC data transmission irrespective of measurement gaps. Instead, the MAC layer 404 provides measurement gap info to a second layer, such as the PDCP layer 402, in operation 701. After receiving the measurement gap information, the second layer, such as the PDCP layer 402, only submits URLLC data packets to lower layers, for example to the RLC layer 403 in operation 702. After receiving the data from the RLC layer 403, the MAC layer 404 terminates the measurement gap in operation 703 and transmits the data to the network access device 200 in operation 704. The client device 100 can use, for example, URLLC configured UL transmission procedures for the transmission in operation 704. Thus, in this embodiment, the client device can transmit the UL URLLC data to the serving network access device 200 without a network predefined logical channel.

According to an embodiment, the client device 100 is configured to implement the MAC layer 404. The MAC layer 404 is configured to in response to receiving the UL URLLC data from the data buffer 104 during the measurement gap, terminate the measurement gap and transmit the UL URLLC data to the serving network access device. The MAC layer 404 is further configured to, in response to receiving any data except UL URLLC data during the measurement gap, omit transmitting the data at least until the measurement gap has been passed.

According to another embodiment, the client device 100 is further configured to implement a second layer and the MAC layer 404, wherein the second layer is configured to receive information about the measurement gap from the MAC layer 404. The second layer may comprise, for example, the PDCP layer 402 and/or the RLC layer 403. The second layer is configured to, upon data arriving from an upper layer to the data buffer 104 during the measurement gap, forward the data to the MAC layer 404 if the data is UL URLLC data and to otherwise omit forwarding the data at least until the measurement gap has been passed. The MAC layer 404 is further configured to provide the information about the measurement gap to the second layer. The upper layer may be, for example, a TCP layer, an UDP layer, or any other layer above the second layer in the protocol stack.

According to an embodiment, the MAC layer 404 is configured to upon reception of any data during the measurement gap terminate the measurement gap and transmit the data.

According to an embodiment, the measurement during the measurement gap comprises at least one of: intra-frequency measurement; inter-frequency measurement, and inter radio access technology measurement.

The data buffer 104 may be located, for example, in the memory 103 of the client device 100 as illustrated in FIG. 1. Different layers, such as those illustrated in FIGs. 4 and 5, in the protocol stack can, for example, use pointers to access this buffer and pass the pointers between layers in the protocol stack in order to let other layers access the data buffer 104. Alternatively, the data buffer 104 may be passed between layers in the protocol stack.

It should be appreciated that in the embodiment presented in FIG. 6 and in the embodiment presented in FIG. 7, the client device 100 may transmit UL URLLC data using at least one preconfigured logical channel. In the embodiment of FIG. 7, the at least one preconfigured logical channel can be determined, for example, by the mappings between different layers in the protocol stack as presented in FIG. 5. These mappings can be configured, for example, by the network access device 200. Therefore, in the embodiment of FIG. 7, the client device 100 can transmit UL URLLC data to the network access device 200 using preconfigured UL URLLC procedures without a network predefined logical channel. In the embodiment of FIG. 6, on the other hand, the at least one preconfigured logical channel can be determined by the network predefined logical channel. There may be a plurality of logical channels configured for different URLLC applications or services.

In the following embodiment, a mapping of logical channels is presented according to an embodiment. The network access device 200 may configure, for example, logical channels LCH1, LCH2, LCH3, and LCH4. According to the configuration, LCH1 is meant for signaling, LCH2 is meant for URLLC application X, LCH3 is meant for URLLC application Y, and LCH4 is meant for eMBB. Network predefined logical channel may refer to a case where the network access device 200 explicitly states which logical channel should be served irrespective of measurement gaps. The network access device 200 may, for example, explicitly configure that "the data on LCH2" to be transmitted irrespective of measurement gaps. If the network access device 200 does not configure or define a network predefined logical channel, layers in the protocol stack can select the URLLC data to be sent during measurement gaps. This data could have been mapped on, for example, LCH2 or LCH3 by the network access device 200.

The transmission of URLLC data to the network access device 200 during measurement gaps can be a grant-based or a grant-free transmission according to an embodiment. This may apply to all embodiment presented above. If the client device 100 is configured with grant-based transmission for URLLC, the MAC layer 404 can first send a scheduling request, SR, to the network access device 200 after receiving URLLC data from higher layers during a measurement gap. Similarly, if the client device 100 is configured with grant-free transmission for URLLC, the MAC layer 404 can transmit the URLLC data to the network access device 200 without sending an SR.

According to an embodiment, the serving network access device 200 may configure a measurement gap specification specifying at least one measurement gap for the client device 100 and transmit the measurement gap specification to the client device 100. Thus, the network access device 200 may change the measurement gap configuration dynamically to suit sporadic traffic pattern of URLLC services. Hence, in case the network access device 200 determines an arrival of an UL data packet from the client device 100 in a configured measurement gap, the network access device 200 may reconfigure a new (single) measurement gap for replacing the omitted/abandoned measurement gap, or may reconfigure the (entire) measurement gap pattern.

The functionality described herein can be performed, at least in part, by one or more computer program product components such as software components. According to an embodiment, the network access device 100 and/or the client device 200 comprise the processor 101, 201 configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as embodiments of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. The term 'and/or' may be used to indicate that one or more of the cases it connects may occur. Both, or more, connected cases may occur, or only either one of the connected cases may occur.

The operations of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements. The above specification, embodiments and data provide a complete description of the structure and use of exemplary embodiments.

## Claims

1. A client device (100), configured to:
perform a measurement during a preconfigured measurement gap, wherein during the preconfigured measurement gap the client device (100) transmits and receives no data with a serving network access device (200) except data related to random access;
in response to uplink, UL, ultra-reliable low-latency communications, URLLC, data arriving to a data buffer (104) of the client device (100) during the preconfigured measurement gap, terminate the preconfigured measurement gap independently of a configuration of the preconfigured measurement gap; and
transmit the UL URLLC data to the serving network access device (200),
**characterized in that** the client device is further configured to:
implement a second layer (402, 403) and a medium access control, MAC, layer (404);
wherein the MAC layer (404) is further configured to provide the information about the measurement gap to the second layer; and
wherein the second layer is configured to:
receive information about the measurement gap from the MAC layer (404); and
upon data arriving from an upper layer above the second layer to the data buffer (104) during the measurement gap, forward the data to the MAC layer (404) if the data is UL URLLC data and to otherwise omit forwarding the data at least until the measurement gap has been passed.

2. The client device (100) of claim 1, further configured to:
transmit the UL URLLC data using at least one preconfigured logical channel (504).

3. The client device (100) of any preceding claim, further configured to:
before transmitting the UL URLLC data, receive a configuration message from the serving network access device (200), wherein the configuration message comprises an instruction to map the UL URLLC data to at least one network predefined logical channel; and
transmit the UL URLLC data using the network predefined logical channel.

4. The client device (100) of any of claims 1-3,
wherein the MAC layer (404) is further configured to:
in response to receiving the UL URLLC data from the data buffer (104) during the measurement gap, terminate the measurement gap and transmit the UL URLLC data to the serving network access device (200).

5. The client device (100) of any of claims 1-4, wherein the second layer comprises one of: a packet data convergence protocol, PDCP, layer (402), and a radio link control, RLC, layer (403).

6. The client device (100) according to any preceding claim, wherein the measurement during the measurement gap comprises at least one of:
intra-frequency measurement;
inter-frequency measurement; and
inter radio access technology measurement.

7. A method executed by a client device, comprising:
performing a measurement during a preconfigured measurement gap, wherein during the preconfigured measurement gap a client device transmits and receives no data with a serving network access device except data related to random access;
in response to uplink, UL, ultra-reliable low-latency communications, URLLC data arriving to a data buffer of the client device during the preconfigured measurement gap, terminating (703) the preconfigured measurement gap independently of a configuration of the preconfigured measurement gap; and
transmitting (704) the UL URLLC data to the serving network access device,
**characterized by** the method further comprising:
implementing a second layer and a medium access control, MAC, layer;
providing, by the MAC layer, the information about the measurement gap to the second layer;
receiving, by the second layer, information about the measurement gap from the MAC layer; and
upon data arriving from an upper layer above the second layer to the data buffer during the measurement gap, forwarding, by the second layer, the data to the MAC layer if the data is UL URLLC data and to otherwise omit forwarding the data at least until the measurement gap has been passed.

8. A computer program comprising program code configured to perform a method according to claim 7 when the computer program is executed on a computer.

## Patentansprüche

1. Client-Gerät (100), das ausgebildet ist zum:
Durchführen einer Messung während einer vorkonfigurierten Messlücke, wobei das Client-Gerät (100) während der vorkonfigurierten Messlücke keine Daten mit einem bedienenden Netzwerkzugangsgerät (200) sendet und empfängt, mit Ausnahme von Daten, die sich auf einen Direktzugriff beziehen;
wobei als Reaktion auf Uplink-, UL-, "Ultra-Reliable-Low-Latency-Communications"-, URLLC-Daten, die während der vorkonfigurierten Messlücke in einem Datenpuffer (104) des Client-Geräts (100) ankommen, Beenden der vorkonfigurierten Messlücke unabhängig von einer Konfiguration der vorkonfigurierten Messlücke, und
Senden der UL-URLLC-Daten an das bedienende Netzwerkzugangsgerät (200),
**dadurch gekennzeichnet, dass** das Client-Gerät ferner ausgebildet ist zum:
Implementieren einer zweiten Schicht (402, 403) und einer Medienzugangssteuerungs, MAC, Schicht (404);
wobei die MAC-Schicht (404) ferner ausgebildet ist, der zweiten Schicht Informationen über die Messlücke bereitzustellen; und
wobei die zweite Schicht ausgebildet ist zum:
Empfangen von Informationen über die Messlücke von der MAC-Schicht (404); und bei Ankunft von Daten von einer oberen Schicht über der zweiten Schicht in dem Datenpuffer (104) während der Messlücke, Weiterleiten der Daten an die MAC-Schicht (404), wenn es sich bei den Daten um UL-URLLC-Daten handelt, und andernfalls Unterlassen einer Weiterleitung der Daten zumindest bis die Messlücke durchlaufen wurde.

2. Client-Gerät (100) nach Anspruch 1, ferner ausgebildet zum:
Senden der UL-URLLC-Daten über mindestens einen vorkonfigurierten logischen Kanal (504).

3. Client-Gerät (100) nach einem der vorhergehenden Ansprüche, ferner ausgebildet zum:
vor dem Senden der UL-URLLC-Daten, Empfangen einer Konfigurationsnachricht von dem bedienenden Netzwerkzugangsgerät (200), wobei die Konfigurationsnachricht eine Anweisung zum Zuordnen der UL-URLLC-Daten zu mindestens einem vordefinierten logischen Kanal in dem Netzwerk umfasst; und
Senden der UL-URLLC-Daten über den in dem Netzwerk vordefinierten logischen Kanal.

4. Client-Gerät (100) nach einem der Ansprüche 1-3,
wobei die MAC-Schicht (404) ferner konfiguriert ist zum:
als Reaktion auf den Empfang der UL-URLLC-Daten von dem Datenpuffer (104) während der Messlücke, Beenden der Messlücke und Senden der UL-URLLC-Daten an das bedienende Netzwerkzugangsgerät (200).

5. Client-Gerät (100) nach einem der Ansprüche 1 bis 4, wobei die zweite Schicht eines umfasst von: einer Paketdaten-Konvergenzprotokoll-Schicht (PDCP) (402), und einer Funkverbindungssteuerungsschicht (RLC) (403).

6. Client-Gerät (100) nach einem der vorhergehenden Ansprüche, wobei die Messung während der Messlücke mindestens eines umfasst von:
einer Intrafrequenzmessung;
einer Interfrequenzmessung; und
einer Interradio-Zugangstechnologie-Messung.

7. Verfahren, ausgeführt durch ein Client-Gerät, umfassend:
Durchführen einer Messung während einer vorkonfigurierten Messlücke, wobei ein Client-Gerät während der vorkonfigurierten Messlücke keine Daten mit einem bedienenden Netzwerkzugangsgerät sendet und empfängt, mit Ausnahme von Daten, die sich auf einen Direktzugriff beziehen;
als Reaktion auf Uplink-, UL-, "Ultra-Reliable-Low-Latency-Communications"-, URLLC-Daten, die während der vorkonfigurierten Messlücke in einem Datenpuffer des Clientgeräts ankommen, Beenden (703) der vorkonfigurierten Messlücke unabhängig von einer Konfiguration der vorkonfigurierten Messlücke, und
Senden (704) der UL-URLLC-Daten an das bedienende Netzwerkzugangsgerät,
**dadurch gekennzeichnet, dass** das Verfahren ferner umfasst:
Implementieren einer zweiten Schicht und einer Medienzugangssteuerungs-, MAC, Schicht,
Bereitstellen, durch die MAC-Schicht, der Informationen über die Messlücke an die zweite Schicht,
Empfangen, durch die zweite Schicht, von Informationen über die Messlücke von der MAC-Schicht; und
bei Ankunft von Daten von einer oberen Schicht über der zweiten Schicht in dem Datenpuffer während der Messlücke, Weiterleiten, durch die zweite Schicht, der Daten an die MAC-Schicht, wenn es sich bei den Daten um UL-URLLC-Daten handelt, und andernfalls Unterlassen einer Weiterleitung der Daten zumindest bis die Messlücke durchlaufen wurde.

8. Computerprogramm, umfassend Programmcode, der dazu ausgebildet ist, ein Verfahren nach Anspruch 7 auszuführen, wenn das Computerprogramm auf einem Computer ausgeführt wird.

## Revendications

1. Dispositif client (100), configuré pour :
réaliser une mesure durant un intervalle de mesure préconfiguré, durant l'intervalle de mesure préconfiguré le dispositif client (100) ne transmettant et ne recevant aucune donnée avec un dispositif d'accès réseau de desserte (200), à l'exception de données relatives à un accès aléatoire ;
en réponse à l'arrivée de données de communications ultra-fiables à faible latence, URLLC, de liaison montante, UL, dans une mémoire tampon de données (104) du dispositif client (100) durant l'intervalle de mesure préconfiguré, clore l'intervalle de mesure préconfiguré indépendamment d'une configuration de l'intervalle de mesure préconfiguré ; et
transmettre les données URLLC UL au dispositif d'accès réseau de desserte (200),
**caractérisé en ce que** le dispositif client est configuré en outre pour :
implémenter une deuxième couche (402, 403) et une couche de commande d'accès au support, MAC, (404) ;
dans lequel la couche MAC (404) est configurée en outre pour fournir les informations relatives à l'intervalle de mesure à la deuxième couche ; et
dans lequel la deuxième couche est configurée pour :
recevoir des informations relatives à l'intervalle de mesure en provenance de la couche MAC (404) ; et
à l'arrivée de données en provenance d'une couche supérieure au-dessus de la deuxième couche dans la mémoire tampon de données (104) durant l'intervalle de mesure,
transférer les données à la couche MAC (404) si les données sont des données URLLC UL et omettre sinon de transférer les données au moins jusqu'à ce que l'intervalle de mesure ait été dépassé.

2. Dispositif client (100) selon la revendication 1, configuré en outre pour :
transmettre les données URLLC UL en utilisant au moins un canal logique préconfiguré (504).

3. Dispositif client (100) selon une quelconque revendication précédente, configuré en outre pour :
avant de transmettre les données URLLC UL, recevoir un message de configuration en provenance du dispositif d'accès réseau de desserte (200), dans lequel le message de configuration comprend une instruction pour mapper les données URLLC UL sur au moins un canal logique de réseau prédéfini ; et
transmettre les données URLLC UL à l'aide du canal logique de réseau prédéfini.

4. Dispositif client (100) selon l'une quelconque des revendications 1 à 3,
dans lequel la couche MAC (404) est configurée en outre pour :
en réponse à la réception des données URLLC UL en provenance de la mémoire tampon de données (104) durant l'intervalle de mesure, clore l'intervalle de mesure et transmettre les données URLLC UL au dispositif d'accès réseau de desserte (200).

5. Dispositif client (100) selon l'une quelconque des revendications 1 à 4, dans lequel la deuxième couche comprend l'une parmi : une couche de protocole de convergence de données par paquets, PDCP, (402), et une couche de commande de liaison radio, RLC, (403).

6. Dispositif client (100) selon une quelconque revendication précédente, dans lequel la mesure durant l'intervalle de mesure comprend au moins l'une parmi :
une mesure intrafréquence ;
une mesure inter-fréquences ; et
une mesure inter-technologies d'accès radio.

7. Procédé exécuté par un dispositif client, comprenant :
la réalisation d'une mesure durant un intervalle de mesure préconfiguré, dans lequel, durant l'intervalle de mesure préconfiguré, un dispositif client ne transmet et ne reçoit aucune donnée avec un dispositif d'accès réseau de desserte, à l'exception de données relatives à un accès aléatoire ;
en réponse à l'arrivée de données de communications ultra-fiables à faible latence, URLLC, de liaison montante, UL, dans une mémoire tampon de données du dispositif client durant l'intervalle de mesure préconfiguré, la clôture (703) de l'intervalle de mesure préconfiguré indépendamment d'une configuration de l'intervalle de mesure préconfiguré ; et
la transmission (704) des données URLLC UL au dispositif d'accès réseau de desserte,
**caractérisé par le fait que** le procédé comprend en outre :
l'implémentation d'une deuxième couche et d'une couche de commande d'accès au support, MAC ;
la fourniture, par la couche MAC, des informations relatives à l'intervalle de mesure à la deuxième couche ;
la réception, par la deuxième couche, d'informations relatives à l'intervalle de mesure en provenance de la couche MAC ; et
à l'arrivée de données en provenance d'une couche supérieure au-dessus de la deuxième couche dans la mémoire tampon de données durant l'intervalle de mesure, le transfert, par la deuxième couche, des données à la couche MAC si les données sont des données URLLC UL et l'omission sinon du transfert des données au moins jusqu'à ce que l'intervalle de mesure ait été dépassé.

8. Programme d'ordinateur comprenant un code de programme configuré pour réaliser un procédé selon la revendication 7 lorsque le programme d'ordinateur est exécuté sur un ordinateur.
